# FASCICULE DE BREVET EUROPEEN

(11) **EP 0 869 377 B1**
(45) Date de publication et mention de la délivrance du brevet: **05.10.2005**
(21) Numéro de dépôt: 98410034.7
(22) Date de dépôt: 01.04.1998
(51) Int. Cl.: G02B 6/126, G02F 1/00

(54) **Composant d'optique intégrée avec effet de polarisation**
Integriertes optisches Bauelement mit Polarisationseffekt
Integrated optical element with polarization effect

(30) Priorité: 07.04.1997 FR 9704435
(43) Date de publication de la demande: 07.10.1998
(73) Titulaire: SCHNEIDER ELECTRIC INDUSTRIES SAS, 92500 Rueil-Malmaison (FR)
(72) Inventeur: Lang, Thiemo, 38050 Grenoble cedex 09 (FR); Benech, Pierre, 38050 Grenoble cedex 09 (FR)
(74) Mandataire: Jouvray, Marie-Andrée

(56) Documents cités:
- EP-A- 0 129 463
- EP-A- 0 731 367
- EP-A- 0 735 389
- DE-A- 3 802 925
- DE-A- 19 500 135
- DE-A- 19 530 461
- PATENT ABSTRACTS OF JAPAN vol. 016, no. 182 (P-1346), 30 avril 1992 & JP 04 021828 A (HIKARI KEISOKU GIJUTSU KAIHATSU KK), 24 janvier 1992,

## Description

L'invention concerne un composant d'optique intégrée selon le préambule de la revendication 1.

Dans de nombreuses applications utilisant des capteurs optiques et des dispositifs de transmission optique à débit élevé, il est essentiel d'avoir un état de polarisation bien défini de l'onde lumineuse. Par ailleurs, la sensibilité à la polarisation des composants d'optique intégrée anisotropes destinés à être utilisés dans les interrupteurs, commutateurs, filtres et amplificateurs optiques est un problème important, qui peut être résolu par l'utilisation de dispositifs permettant de modifier la polarisation.

Le document EP-A-129 463 décrit un dispositif polariseur optique intégré à séparation spatiale de polarisations. Dans ce dispositif, des régions d'interaction sont obtenues en modifiant de manière contrôlée, par dopage ou substitution d'ions, le matériau d'un substrat, lui-même fortement anisotrope. Le dopage des régions d'interaction est réalisé de manière à ce que ces régions aient un indice effectif de réfraction respectivement inférieur et supérieur à ceux d'un guide d'onde de transmission pour des première et seconde directions de polarisation. De cette manière, la composante d'une onde ayant la seconde direction de polarisation cesse d'être guidée.

Dans ce type de dispositif, la lumière correspondant à l'une des polarisations est éliminée et ne peut plus être récupérée. Il y a en conséquence, perte d'énergie, et dans certains cas, perte d'information. Ce type de dispositif permet uniquement de séparer deux polarisations, mais ne permet en aucun cas de réaliser une rotation de polarisation.

L'invention a pour but un composant d'optique intégrée avec effet de polarisation permettant d'agir de façon prédéterminée sur l'état de polarisation de la lumière, c'est à dire soit de maintenir cet état de polarisation, soit de le modifier de manière prédéterminée. Il doit permettre de réaliser tout type de polariseur ou de réaliser une rotation de polarisation.

Selon l'invention, ce but est atteint par un dispositif selon la revendication 1.

Les guides d'onde plans segmentés latéraux agissent sur l'anisotropie du guide d'onde de transmission par des contraintes mécaniques et des effets de géométrie, produisant ainsi un guide d'onde à haute biréfringence.

Selon un premier développement de l'invention, le composant comporte des guides d'onde plans segmentés disposés symétriquement de part et d'autre du guide d'onde de transmission

Le guide d'onde de transmission présente alors des propriétés de maintien de l'état de polarisation, tout en maximisant la biréfringence du guide d'onde de transmission.

Selon un second développement de l'invention, le composant comporte des guides d'onde plans segmentés disposés asymétriquement de part et d'autre du guide d'onde de transmission. Par cette perturbation asymétrique du profil d'indice, le ou les axes propres du guide d'onde de transmission sont inclinés et ceci permet la réalisation de dispositifs modifiant l'état de polarisation de la lumière.

Pour diminuer les pertes entre le guide d'onde de transmission et le guide d'onde plan segmenté, il est possible de disposer le guide plan segmenté à une distance prédéterminée, de préférence inférieure à quelques dizaines de micromètres, du guide d'onde de transmission.

Pour augmenter les contraintes, le composant peut comporter au moins un guide d'onde plan additionnel disposé parallèlement à l'axe longitudinal du guide d'onde de transmission, à l'extrémité d'un guide d'onde plan segmenté associé opposée au guide d'onde de transmission.

D'autres avantages et caractéristiques ressortiront plus clairement de la description suivante de différents modes de réalisation de l'invention, donnés à titre d'exemples non limitatifs et représentés aux dessins annexés dans lesquels :
Les figures 1 à 3 illustrent trois modes de réalisation particuliers d'un composant selon l'invention dans lesquels les perturbations sont symétriques par rapport à l'axe longitudinal du guide d'onde de transmission.
La figure 4 représente les variations d'indice effectif de réfraction dans le composant selon la figure 3.
La figure 5 représente un mode particulier de réalisation de l'invention dans lequel le guide d'onde de transmission est constitué par un coupleur.
Les figures 6 et 7 représentent deux modes de réalisation particuliers de l'invention, avec un seul guide d'onde plan segmenté.
Les figures 8 et 9 représentent deux modes de réalisation particuliers de l'invention, comportant des guides d'onde plans segmentés disposés alternativement de part et d'autre du guide d'onde de transmission.

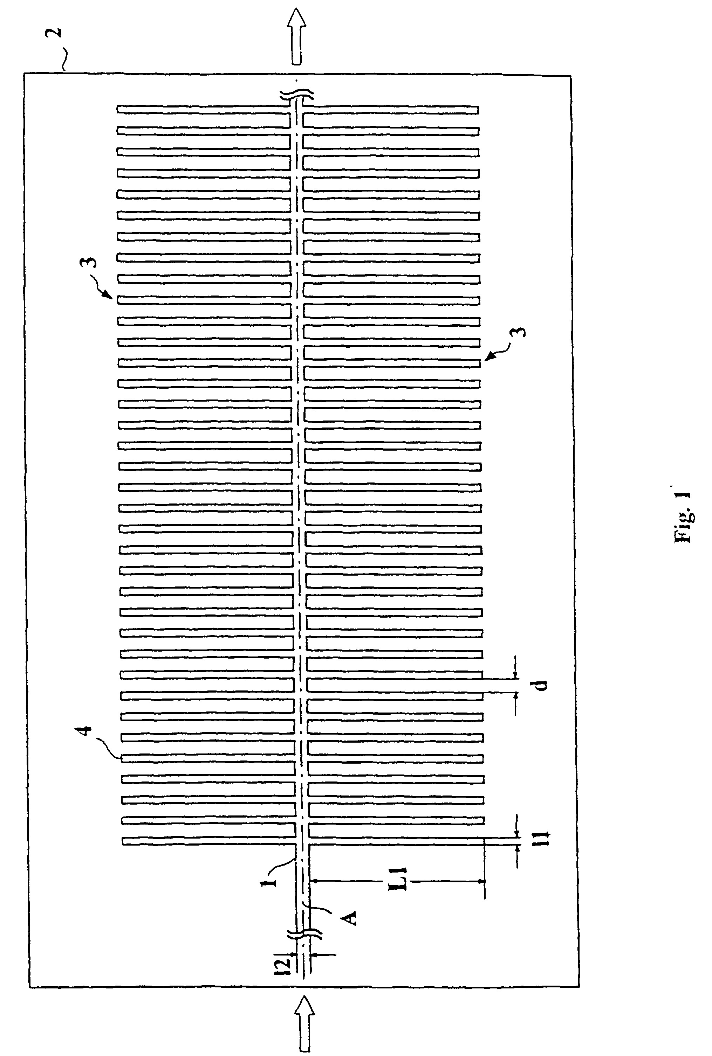

Sur la figure 1, un guide d'onde de transmission 1 est réalisé, par des techniques d'optique intégrée, dans un substrat 2. Des flèches, à gauche et à droite de la figure 1, indiquent le sens de propagation d'une onde lumineuse dans le guide 1. Dans un mode de réalisation préférentiel, le substrat 2 est un substrat de verre et le guide 1 est réalisé, de manière connue, par échange d'ions. Au cours de l'échange ionique des contraintes mécaniques provoquent des modifications anisotropes de l'indice de réfraction dans le guide et, en conséquence, le guide 1 ainsi obtenu est un guide biréfringent. Un guide de ce type n'est pas suffisamment biréfringent lorsqu'on veut obtenir des effets de polarisation prédéterminés.

L'application de contraintes ou de perturbations additionnelles appropriées sur le guide 1 permet de rendre celui-ci hautement biréfringent.

Selon l'invention, ces contraintes ou perturbations additionnelles sont produites par des structures comportant au moins un guide d'onde plan segmenté 3 disposé latéralement par rapport au guide 1. Ces structures appliquant sur le guide 1 les contraintes ou perturbations additionnelles sont réalisées dans le substrat en même temps que le guide 1. Il suffit en effet d'adapter le masque destiné à la réalisation du guide 1 et, par échange d'ions, on peut obtenir simultanément le guide 1 et les guides plans 3, sans aucune étape supplémentaire.

Dans le mode de réalisation représenté, un guide d'onde plan segmenté 3 est constitué par un ensemble de guides d'onde latéraux 4, de largeur l1 et de longueur L1, parallèles les uns aux autres, séparés par un espace d et perpendiculaires à l'axe longitudinal A du guide 1.

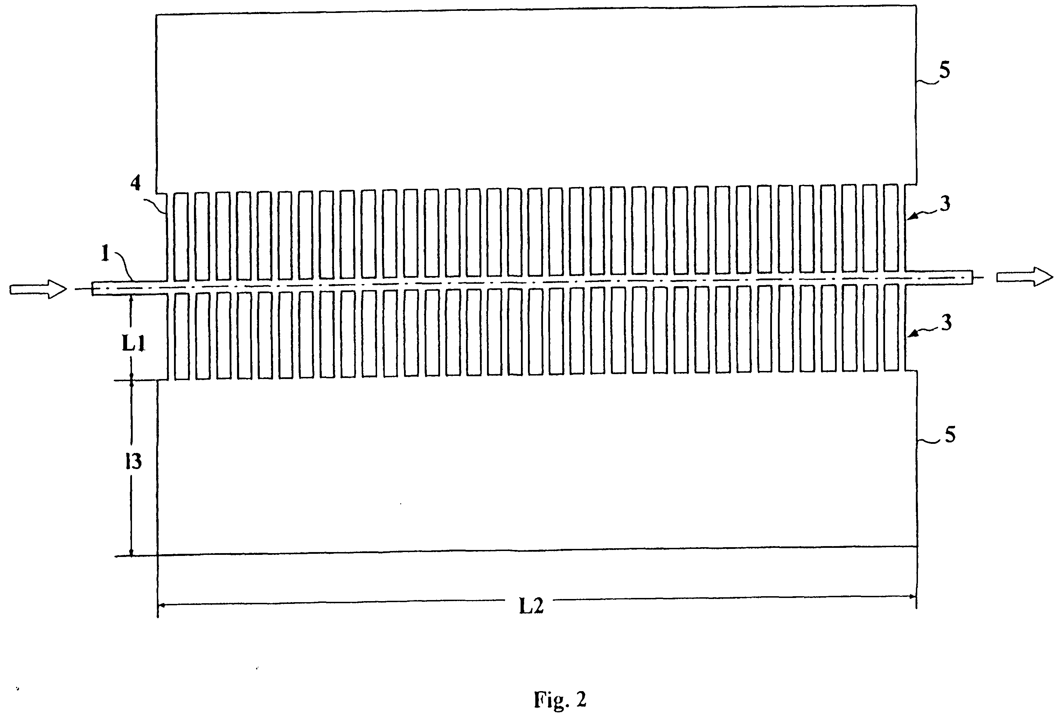

Sur les figures 1 et 2, le guide 1, de largeur 12, coupe périodiquement, à angle droit, les guides d'onde latéraux 4, disposés symétriquement de part et d'autre du guide 1. Les guides latéraux 4 augmentent périodiquement, dans le sens de propagation de la lumière la composante latérale de la contrainte exercée sur le guide 1. Ils augmentent ainsi périodiquement la biréfringence du guide 1.

Les guides latéraux 4 étant étroits et perpendiculaires à l'axe A du guide 1, il y a peu de pertes, la lumière circulant dans le guide 1 n'étant guère diffractée dans les guides latéraux.

L'application symétrique de contraintes sur le guide 1 permet d'obtenir un guide 1 anisotrope avec de bonnes caractéristiques de maintien de la polarisation.

Pour augmenter les contraintes exercées sur le guide 1, des guides d'onde plans additionnels 5 peuvent, comme représenté à la figure 2, être formés dans le substrat. Un guide 5, de largeur l3 et de longueur L2, est disposé, parallèlement à l'axe longitudinal A du guide 1, à l'extrémité d'un guide d'onde plan segmenté 3 associé opposée au guide 1. Ainsi, sur la figure 2 des guides 5 sont disposés de part et d'autre du guide 1, à une distance L1 de celui-ci sur la partie externe du composant. La distance L1 doit être suffisante pour éviter des pertes par couplage du guide 1 vers le guide 5.

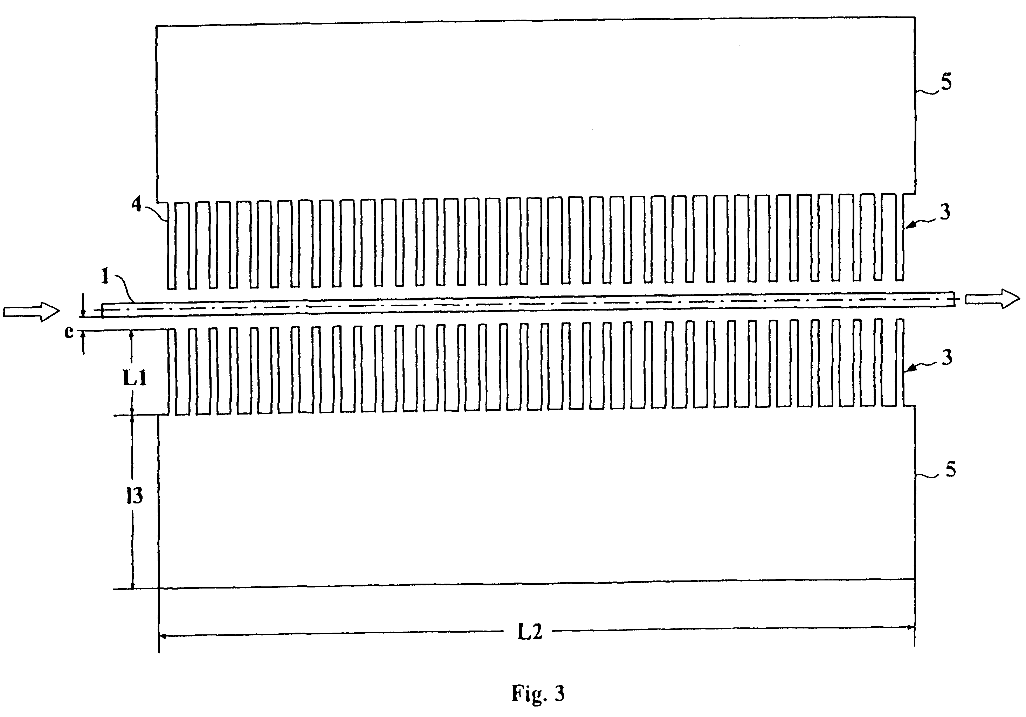

Le mode particulier de réalisation représenté à la figure 3 se distingue du composant représenté à la figure 2 par le fait que les guides d'onde latéraux 4 ne sont pas en contact avec le guide 1, mais disposés à une distance e du guide 1. La distance e, typiquement inférieure à quelques dizaines de micromètres, permet de réduire les couplages résiduels, donc les pertes, et d'améliorer le guidage de la lumière par le guide 1. Les contraintes appliquées par les guides 4 sur le guide 1 sont alors réduites par rapport aux modes de réalisation des figures 1 et 2.

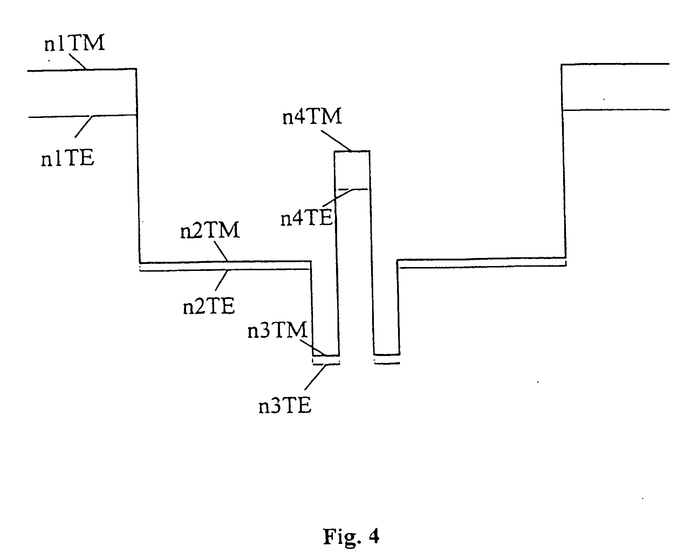

La figure 4 illustre les variations des indices effectifs de réfraction nTM (en trait plein) et nTE (en pointillé), respectivement pour les états de polarisation TM et TE, dans le composant selon la figure 3.

Les guides d'onde étant réalisés simultanément, leurs indices effectifs de réfraction dépendent essentiellement de leurs dimensions. Celles-ci sont choisies de manière à ce que les indices effectifs de réfraction dans les guides plans segmentés soient inférieurs ou égaux aux indices effectifs de réfraction dans le guide d'onde de transmission 1, empêchant ainsi les fuites optiques en direction des guides plans segmentés. En pratique, plus un guide d'onde est étroit, plus ses indices effectifs de réfraction sont faibles.

L'analyse des variations de l'indice sur la figure 4 montre, en considérant ces variations de gauche à droite, que les indices nTM et nTE qui ont des premières valeurs n1TM et n1TE élevées dans le guide additionnel 5, diminuent jusqu'à des valeurs moyennes n2TM et n2TE dans le guide plan segmenté 3, puis prennent des valeurs très faibles n3TM et n3TE dans l'espace séparant le guide plan segmenté 3 du guide 1, avant de reprendre des valeurs élevées n4TM et n4TE dans le guide 1. Les variations d'indice sont symétriques par rapport au guide 1. La distance e entre les guides 1 et 3 améliore le guidage de la lumière dans le guide 1. Le guide additionnel 5 a des indices effectifs de réfraction n1TM et n1TE supérieures aux indices effectifs de réfraction n4TM et n4TE du guide 1.

La distance importante existant entre le guide additionnel 5 et le guide 1 empêche toute fuite de l'un vers l'autre bien que les indices effectifs de réfraction du guide additionnel 5 soient, en raison de sa surface importante, supérieure à ceux du guide 1.

Les composants selon les figures 1 à 3 permettent d'obtenir des guides d'onde très biréfringents fournissant un bon maintien de l'état de polarisation de la lumière. Ils peuvent notamment être utilisés dans la fabrication de déphaseurs et de polariseurs. Le mode de réalisation de la figure 3 peut plus particulièrement être utilisé pour créer un polariseur grâce à l'effet tunnel appliqué au mode TE.

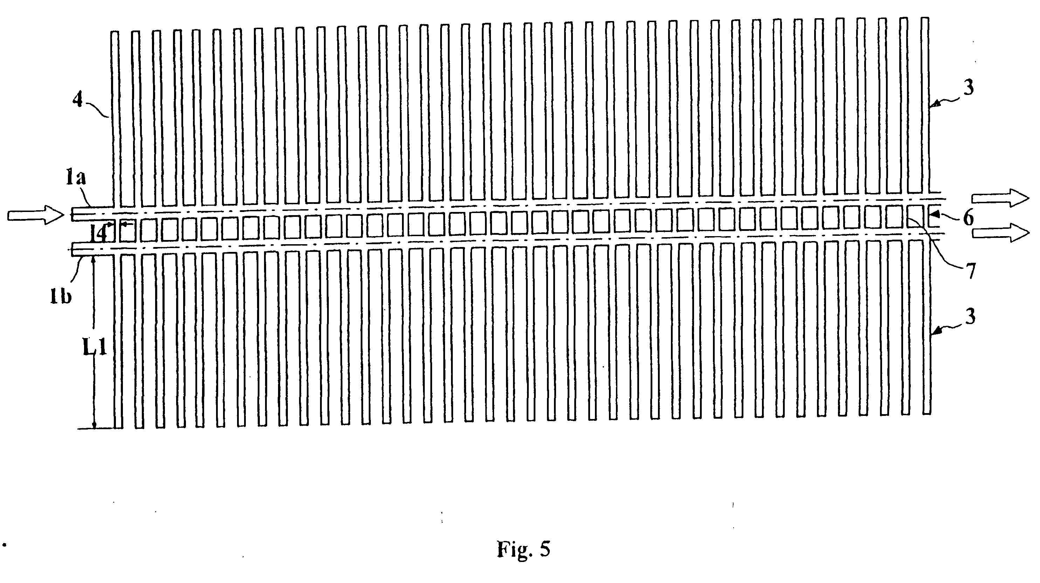

Sur la figure 5, le guide d'onde de transmission est constitué par un coupleur comportant deux guides d'onde parallèles 1a et 1b. Dans le mode de réalisation représenté, l'entrée de la lumière dans le composant se fait par l'entrée du guide 1a, la lumière sortant partiellement par le guide 1a et, par couplage, par le guide 1b. Les interactions entre les deux guides provoquent généralement une inclinaison des axes propres de chacun des guides 1a et 1b. Or, l'état de polarisation dans le coupleur devient difficilement contrôlable lorsqu'il y a une telle rotation des axes propres. L'utilisation de structures du même type que celles décrites dans les figures 1 à 3, permet de réduire, ou même de compenser cette inclinaison des axes propres des guides 1a et 1b. Sur la figure 5, deux guides d'onde plans segmentés 3 sont disposés symétriquement, de part et d'autre de l'ensemble constitué par les deux guides 1a et 1b. Des guides plans additionnels 5 peuvent être prévus, comme sur la figure 2, et les guides 3 peuvent être placés à une distance e du guide 1a ou 1b correspondant, comme sur la figure 3.

Sur la figure 5, un guide plan segmenté intermédiaire 6 est disposé dans la zone intermédiaire comprise entre les guides 1a et 1b. Le guide plan segmenté intermédiaire 6 est constitué par une pluralité de guides d'onde intermédiaires 7, parallèles, disposés dans le prolongement des guides d'onde latéraux 4 des guides plan 3. Les guides 7 ont une largeur 14 inférieure à la largeur 11 des guides 4 correspondants. Ainsi, dans le composant selon la figure 5, les guides plans segmentés latéraux 3 augmentent périodiquement la biréfringence des guides 1a et 1b et, simultanément, compensent ou réduisent l'inclinaison de leurs axes propres. Le guide plan segmenté intermédiaire 6 peut être omis pour permettre une meilleure compensation de l'inclinaison des axes propres.

Un composant symétrique à guides d'onde interactifs selon la figure 5 peut être utilisé notamment pour des coupleurs adiabatiques ou directionnels à maintien de polarisation, pour des jonctions en Y, pour des séparateurs de polarisation, et pour des coupleurs en étoile ("phased array"). Par un choix approprié de la dimension des guides 4 et 7 et de leur écartement, il est possible de minimiser les pertes, de redresser les axes propres des guides 1 a et 1b et, en conséquence, d'améliorer leurs propriétés de maintien de la polarisation tout en maximisant la biréfringence du guide de transmission.

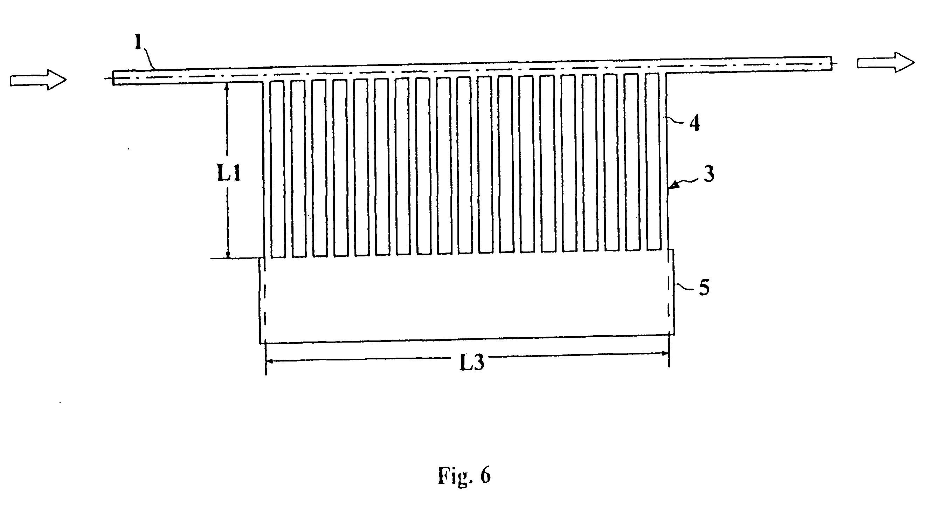

Les figures 6 à 9 illustrent des composants dans lesquels les structures agissant sur le guide de transmission sont asymétriques. Ceci permet d'agir sur l'inclinaison des axes propres du guide de transmission et, en conséquence, de modifier de façon prédéterminée, la polarisation d'une onde lumineuse le traversant.

Le composant selon la figure 6 est du même type que celui représenté à la figure 2, mais avec un seul guide d'onde plan segmenté 3, associé à un guide plan additionnel 5, disposé d'un seul côté du guide de transmission 1. Cette asymétrie provoque une distribution asymétrique du champ due à la géométrie et aux contraintes dans le guide 1 et une rotation d'angle ∅ de ses axes propres par rapport aux axes propres d'une structure symétrique qui sont respectivement perpendiculaire et parallèle à la surface du substrat. Les caractéristiques du guide plan segmenté 3 permettent de définir l'état de polarisation de la lumière à la sortie du guide 1. A titre d'exemple, si L3 correspond à la demi-longueur de battement des modes TE et TM, une onde lumineuse transmise par le guide 1 subit une rotation de 2 ∅ de son plan de polarisation linéaire. Pour une excitation suivant TE ou TM et un angle de rotation ∅ = 45 °, on obtient ainsi un convertisseur de polarisation TE/TM. Pour un angle de rotation ∅ = 22, 5°, le plan de polarisation tourne de 45°, ce qui correspond à une égale répartition de la lumière entre TE et TM pour une injection à l'entrée du guide en TE uniquement ou en TM uniquement.

Avec une longueur L3 égale au quart de la longueur de battement TE/TM et un angle de rotation ∅ = 45°, on convertit une onde TE ou TM en onde circulaire à l'extrémité du guide 1 correspondant à la fin du guide plan 3. Ainsi, le déphasage désiré entre les polarisations est fixé par la longueur L3 du guide plan segmenté 3. L'inclinaison des axes propres du guide de transmission 1 est fonction de la largeur l1, de la longueur L1 et de l'espacement d des guides d'onde latéraux 4 du guide plan segmenté 3.

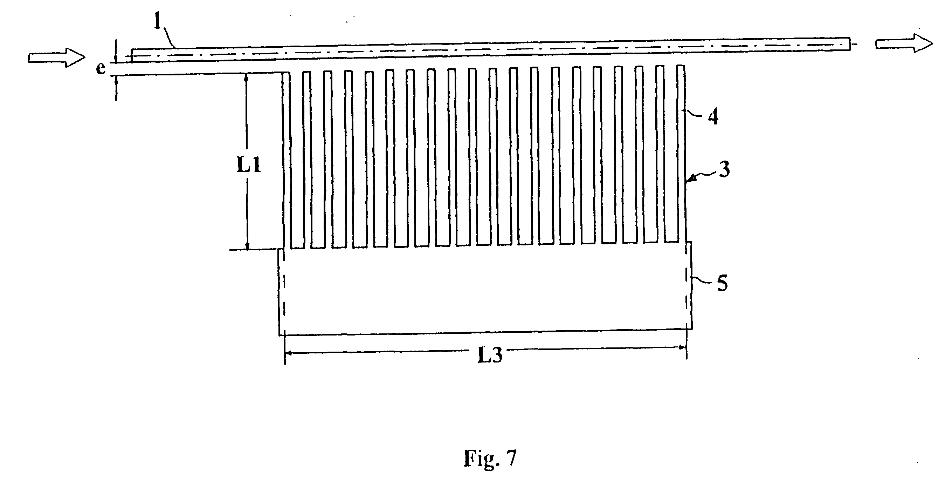

Comme sur la figure 1, le composant selon la figure 6 peut ne pas comporter de guide plan additionnel 5. Le guide plan segmenté 3 peut, comme représenté à la figure 7, être situé à une distance e du guide 1.

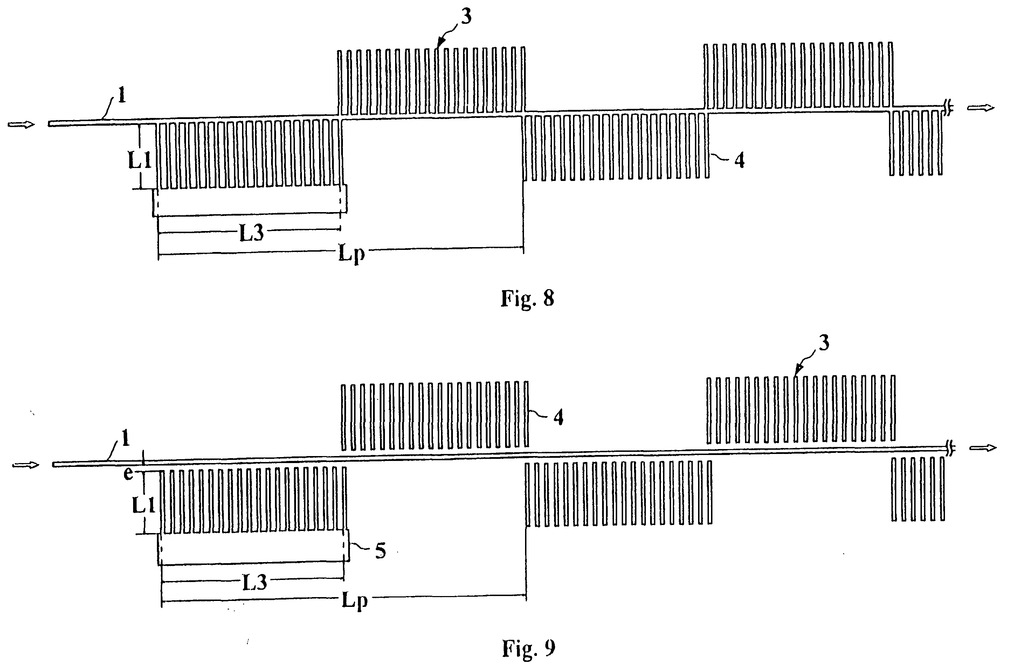

Sur les figures 8 et 9, des guides plans segmentés 3 sont disposés alternativement de part et d'autre du guide 1 avec une période Lp. Sur la figure 8, les guides plans segmentés 3 sont, comme sur la figure 6, en contact avec le guide 1, tandis que sur la figure 9, ils sont, comme sur la figure 7, situés à une distance e du guide 1.

Un guide plan segmenté 3 provoque, comme sur les figures 6 et 7, une rotation de + ∅ ou - ∅ des axes propres du guide 1. On peut montrer que, avec des guides plans segmentés 3 de longueur L3 égale à la demi-longueur de battement des modes TE et TM, l'angle de rotation étant ∅, la polarisation de l'onde incidente a tourné de +2 ∅ à la fin du premier guide plan segmenté, de - 4 ∅ à la fin du second guide plan segmenté, disposé du côté opposé au premier et de + 6 ∅ à la fin du troisième guide plan segmenté. Plus généralement, la rotation de la polarisation est de (-1)ⁿ 2n ∅ après une alternance de n guides plans segmentés disposés longitudinalement alternativement de part et d'autre du guide 1. On peut ainsi obtenir des rotations importantes et précises de l'état de polarisation. En plaçant un polariseur à l'extrémité du guide 1, le dispositif fonctionne comme un filtre optique biréfringent de type "SOLC".

En faisant varier de façon indépendante l'angle de rotation et la longueur L3 de chaque section du guide 1 dont les axes propres sont inclinés, il est possible de réaliser très simplement toute fonction de transfert de polarisation et de réaliser un filtre passe-bande à bande étroite utilisable, notamment, dans les capteurs optiques et en communication optique.

Les dispositions des figures 8 et 9 peuvent également être appliquées dans le cas où, comme sur la figure 5, le guide d'onde de transmission est constitué par deux guides d'onde de transmission 1a et 1b, parallèles couplés. Il est ainsi possible d'agir de façon asymétrique sur la rotation de leurs axes propres et de réaliser des composants destinés à agir sur la polarisation d'une onde lumineuse qu'il serait très difficile, voire impossible de réaliser avec des fibres optiques.

Des guides plans segmentés peuvent aussi être disposés de manière asymétrique, alternativement de part et d'autre d'un coupleur asymétrique constitué par deux guides d'onde de transmission parallèles 1a et 1b de largeurs différentes. Ils peuvent ainsi à la fois éliminer l'angle de rotation créé par le coupleur asymétrique et synchroniser les deux indices effectifcs de réfraction des deux guides d'onde parallèle 1a et 1b pour un premier état de polarisation (TM par exemple), tout en les désynchronisant pour l'autre état de polarisation (TE) perpendiculaire au premier. Dans un tel cas, pour l'état de polarisation synchronisé (TM) il y aura couplage entre le guide d'onde incident 1a et le second guide d'onde 1b du coupleur, tandis que pour l'état de polarisation non synchronisé (TE), il n'y aura pas couplage. Ceci permet notamment de réaliser un séparateur de polarisation TE/TM compact de faible longueur.

Toutes les structures appliquant des contraintes sur le guide d'onde de transmission décrites ci-dessus agissent de manière passive. Il n'est donc pas nécessaire, pour leur fonctionnement, de prévoir un réglage externe. Cependant, un contrôle plus précis de la biréfringence et de l'angle de rotation des axes propres du guide de transmission peuvent être réalisés par dépôt d'une couche planaire additionnelle sur la totalité de la surface du composant.

Par ailleurs, il est possible, de manière connue, de faire varier le déphasage entre les ondes TE et TM ainsi que l'angle ∅ par effet thermo-optique, électro-optique, chimico-optique ou autre, ce qui permet notamment de réaliser des filtres optiques contrôlables pour les structures asymétriques et, éventuellement, de créer une rotation des axes pour les structures symétriques.

L'invention n'est pas limitée à la technique d'échange d'ions décrite ci-dessus mais peut être utilisée avec toute technique d'optique intégrée connue. Les guides d'onde peuvent être formés dans le substrat ou sur le substrat. En fonction de la technique utilisée il peut y avoir des variations dans le mode d'action des structures introduisant une anisotropie sur le guide de transmission. Les modifications de l'anisotropie du guide peuvent être dues à un effet de géométrie de la structure ou aux contraintes. Dans tous les cas, le composant peut être réalisé facilement et précisément par une simple disposition géométrique prédéterminée de guides d'ondes plans segmentés 3 et, éventuellement, de guides plans additionnels 5.

## Revendications

1. Composant d'optique intégrée permettant de contrôler la polarisation d'une onde lumineuse comportant un substrat (2), au moins un guide d'onde de transmission (1 ; 1a , 1b) formé sur ou dans le substrat (2) définisssant un axe longitudinal (A) de transmission dont l'une de ses extrémités sert d'entrée à l'onde lumineuse et sur ou dans le substrat (2), au moins un guide d'onde plan segmenté (3) disposé latéralement par rapport au guide d'onde de transmission (1 ; 1a, 1b) et constitué par une pluralité de guides d'onde latéraux (4) parallèles les uns aux autres, séparés les uns des autres par un espace (d), et faisant un angle droit avec l'axe longitudinal (A) du guide d'onde de transmission (1 ; 1a , 1b), composant **caractérisé en ce que** le guide d'onde de transmission (1, 1a, 1b) et le guide d'onde plan segmenté (3) sont réalisés simultanément et forment ensemble une structure guidante définissant un profil des indices effectifs de réfraction pour les polarisations TE et TM de telle manière que les indices effectifs de réfraction pour les polarisations TE et TM de ladite structure guidante dans les guides d'onde latéraux du guide d'onde segmenté (n2TM, n2TE) soient inférieurs ou égaux au indices effectifs de réfraction pour des polarisations TE et TM de ladite structure guidante dans le guide d'onde de transmission (n4TM, n4TE).

2. Composant selon la revendication 1, **caractérisé en ce qu'**il comporte des guides d'onde plans segmentés (3) disposés symétriquement de part et d'autre du guide d'onde de transmission (1, 1a, 1b).

3. Composant selon la revendication 1, **caractérisé en ce qu'**il comporte des guides d'onde plans segmentés (3) disposés asymétriquement de part et d'autre du guide d'onde de transmission (1, 1a, 1b).

4. Composant selon l'une quelconque des revendications 1 à 3, **caractérisé en ce que** le guide d'onde plan segmenté (3) est disposé à une distance prédéterminée (e), de préférence inférieure à quelques dizaines de micromètres, du guide d'onde de transmission (1, 1a,1b).

5. Composant selon l'une quelconque des revendications 1 à 4, **caractérisé en ce qu'**il comporte au moins un guide d'onde plan additionnel (5), disposé parallèlement à l'axe longitudinal (A) du guide d'onde de transmission (1, 1a, 1b), à l'extrémité du guide d'onde plan segmenté (3) associé opposée au guide d'onde de transmission.

6. Composant selon l'une des revendications 1 à 5, **caractérisé en ce que** le guide d'onde de transmission est constitué de deux guides d'onde parallèles (1a, 1b), l'onde lumineuse étant appliquée à l'entrée d'un des deux guides d'onde parallèle (1a).

7. Composant selon la revendication 6, **caractérisé en ce qu'**il comporte des guides d'onde intermédiaires (7) disposés, dans le prolongement des guides d'onde latéraux (4) du guide plan segmenté (3), dans une zone intermédiaire située entre les deux guides d'onde parallèles (1a, 1b), du guide d'onde de transmission.

8. Composant selon la revendication 7, **caractérisé en ce que** les guides d'onde intermédiaires (7) ont une largeur (14) inférieure à celle (11) des guides d'onde latéraux (4) du guide d'onde plan segmenté (3) correspondant.

9. Composant selon l'une quelconque des revendications 1 à 8, **caractérisé en ce qu'**il comporte un dépôt d'une couche planaire additionnel formé sur la totalité de la surface du composant.

## Patentansprüche

1. Integriert-optisches Bauteil, mit dem sich die Polarisation einer Lichtwelle steuern läßt und das ein Substrat (2), mindestens einen, auf das oder in das Substrat (2) eingebrachten Übertragungswellenleiter (1; 1a, 1b), der eine Übertragungslängsachse (A) definiert, deren eines Ende zur Einkopplung der Lichtwelle dient, sowie mindestens einen, auf das oder in das Substrat (2) eingebrachten, planaren Streifenwellenleiter (3) umfaßt, der seitlich zum Übertragungswellenleiter (1; 1, 1b) angeordnet ist und aus mehreren parallel zueinander verlaufenden, jeweils durch einen Abstand (d) voneinander getrennten und rechtwinklig zur Längsachse (A) des Übertragungswellenleiters (1, 1a, 1b) ausgerichteten lateralen Wellenleitern (4) besteht, **dadurch gekennzeichnet, daß** der Übertragungswellenleiter (1; 1a, 1b) und der planare Streifenwellenleiter (3) gleichzeitig hergestellt werden und zusammen eine Wellenleiteranordnung bilden, deren Profil der effektiven Brechungsindizes für TE- und TM-Polarisation so ausgebildet ist, daß die effektiven Brechungsindizes für TE- und TM-Polarisation der genannten Wellenleiteranordnung in den lateralen Wellenleitern des Streifenwellenleiters (n2TM, n2TE) kleiner oder gleich den effektiven Brechungsindizes für TE- und TM-Polarisation der genannten Wellenleiteranordnung im Übertragungswellenleiter (n4TM, n4TE) sind.

2. Bauteil nach Anspruch 1, **dadurch gekennzeichnet, daß** es planare Streifenwellenleiter (3) umfaßt, die symmetrisch auf beiden Seiten des Übertragungswellenleiters (1; 1a, 1b) angeordnet sind.

3. Bauteil nach Anspruch 1, **dadurch gekennzeichnet, daß** es planare Streifenwellenleiter (3) umfaßt, die asymmetrisch auf beiden Seiten des Übertragungswellenleiters (1; 1a, 1b) angeordnet sind.

4. Bauteil nach irgendeinem der Ansprüche 1 bis 3, **dadurch gekennzeichnet, daß** der planare Streifenwellenleiter (3) in einem bestimmten, vorzugsweise einige Zehntel Mikrometer betragenden Abstand (e) vom Übertragungswellenleiter (1, 1a, 1b) angeordnet ist.

5. Bauteil nach irgendeinem der Ansprüche 1 bis 4, **dadurch gekennzeichnet, daß** es mindestens einen zusätzlichen planaren Wellenleiter (3) umfaßt, der auf der dem Übertragungswellenleiter abgewandten Seite des zugeordneten planaren Streifenwellenleiters (3), parallel zur Längsachse (A) des Übertragungswellenleiters (1, 1a, 1b) angeordnet ist.

6. Bauteil nach einem der Ansprüche 1 bis 5, **dadurch gekennzeichnet, daß** der Übertragungswellenleiter aus zwei parallelen Wellenleitern (1 a, 1b) besteht, wobei die Lichtwelle in den Eingang eines der beiden parallelen Wellenleiter (1a) eingekoppelt wird.

7. Bauteil nach Anspruch 6, **dadurch gekennzeichnet, daß** es Zwischenwellenleiter (7) umfaßt, die in der Verlängerung der lateralen Wellenleiter (4) des planaren Streifenwellenleiters (3), in einem zwischen den beiden parallelen Wellenleitern (1a, 1b) des Übertragungswellenleiters ausgebildeten Zwischenbereich angeordnet sind.

8. Bauteil nach Anspruch 7, **dadurch gekennzeichnet, daß** die Breite (14) der Zwischenwellenleiter (3) kleiner ist als die Breite (I1) der lateralen Wellenleiter (4) des zugeordneten planaren Streifenwellenleiters (3).

9. Bauteil nach irgendeinem der Ansprüche 1 bis 8, **dadurch gekennzeichnet, daß** es eine auf der gesamten Oberfläche des Bauteils aufgebrachte zusätzliche Planarschicht umfaßt.

## Claims

1. Integrated optics component enabling the polarization of a light wave to be controlled, comprising a substrate (2), at least one transmission wave guide (1, 1a , 1b) formed on or in the substrate (2) defining a longitudinal transmission axis (A) one of the ends whereof acts as input for the light wave, and on or in the substrate (2) at least one segmented plane wave guide (3) arranged laterally with respect to the transmission wave guide (1, 1a, 1b) and formed by a plurality of lateral wave guides (4) parallel to one another, separated from one another by a space (d) and forming a right angle with the longitudinal axis
(A) of the transmission wave guide (1, 1a, 1b), component **characterized in that** the transmission wave guide (1, 1a, 1b) and the segmented plane wave guide (3) are achieved simultaneously and together form a guiding structure defining a profile of the effective refractive indexes for the TE and TM polarizations in such a way that the effective refractive indexes for the TE and TM polarizations of said guiding structure in the lateral wave guides of the segmented wave guide (n2TM, n2TE) are smaller than or equal to the effective refractive indexes for TE and TM polarizations of said guiding structure in the transmission wave guide (n4TM, n4TE).

2. Component according to claim 1, **characterized in that** it comprises segmented plane wave guides (3) arranged symmetrically on each side of the transmission wave guide (1, 1a, 1b).

3. Component according to claim 1, **characterized in that** it comprises segmented plane wave guides (3) arranged asymmetrically on each side of the transmission wave guide (1, 1a, 1b).

4. Component according to any one of the claims 1 to 3, **characterized in that** the segmented plane wave guide (3) is arranged at a predetermined distance (e), preferably less than a few tens of micrometers, from the transmission wave guide (1, 1a, 1b).

5. Component according to any one of the claims 1 to 4, **characterized in that** it comprises at least one additional plane wave guide (5), arranged parallel to the longitudinal axis (A) of the transmission wave guide (1, 1 a, 1 b), at the end of the associated segmented plane wave guide (3) opposite the transmission wave guide.

6. Component according to any one of the claims 1 to 5, **characterized in that** the transmission wave guide is formed by two parallel wave guides (1a, 1b), the light wave being applied to the input of one of the two parallel wave guides (1a).

7. Component according to claim 6, **characterized in that** it comprises intermediate wave guides (7) arranged in the extension of the lateral wave guides (4) of the segmented plane guide (3), in an intermediate zone situated between the two parallel wave guides (1a, 1b), of the transmission wave guide.

8. Component according to claim 7, **characterized in that** the intermediate wave guides (7) have a smaller width (14) than that (I1) of the lateral wave guides (4) of the corresponding segmented plane guide (3).

9. Component according to any one of the claims 1 to 8, **characterized in that** it comprises deposition of an additional planar layer formed over the whole surface of the component.
